# EUROPEAN PATENT SPECIFICATION

(11) **EP 1 944 991 B1**
(45) Date of publication and mention of the grant of the patent: **13.05.2015**
(21) Application number: 07100192.9
(22) Date of filing: 05.01.2007
(51) Int. Cl.: H04W 4/22, H04W 76/00

(54) **System and method for conditionally attempting an emergency call set-up**
System und Verfahren zum bedingten Versuch eines Notrufaufbaus
Système et procédé pour l'établissement de manière conditionnelle d'appel d'urgence

(43) Date of publication of application: 16.07.2008
(73) Proprietor: BlackBerry Limited, Waterloo, ON N2K 0A7 (CA)
(72) Inventor: Sokondár, Eniko, Richmond, Greater London TW9 2PG (GB)
(74) Representative: Finnie, Peter John

(56) References cited:
- EP-A- 1 691 538
- WO-A-98/27714
- WO-A-99/30521
- WO-A-02/089515
- WO-A-03/063536
- 3RD GENERATION PARTNERSHIP PROJECT; TECHNICAL SPECIFICATION GROUP SERVICES AND SYSTEM ASPECTS;: "3GPP TS 23.167 v.7.3.0; IP Multimedia Subsystem (IMS) emergency sessions (Release 7)"[Online] December 2006 (2006-12), pages 1-34, XP002435698 Retrieved from the Internet: URL:http://www.3gpp.org/ftp/Specs/archive/ 23_series/23.167/23167-730.zip> [retrieved on 2007-05-31]
- "3rd Generation Partnership Project; Technical Specification Group Core Network and Terminals; IP multimedia call control protocol based on Session Initiation Protocol (SIP) and Session Description Protocol (SDP); Stage 3 (Release 7)", 3GPP STANDARD; 3GPP TS 24.229, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V7.6.0, 1 December 2006 (2006-12-01), pages 1-401, XP050365018,

## Description

The application relates generally to electronic communication, and more particularly to emergency call setups for communication devices.

According to Section 5.1.6 of TS 24.229, version 5, upon a mobile device receiving a 380 (Alternative Service) response with a <type> child element set to "emergency", the mobile device is to automatically attempt an emergency call setup over the CS domain. If the emergency call setup is successful, then an emergency call is established for the mobile device. The mobile device normally receives the 380 response in response to transmitting an invite request message to the network. Therefore, by transmitting the invite request message, the mobile device can trigger the process of establishing an emergency call in the event that there is an emergency.

### General

As noted above, a mobile device can trigger the process of establishing an emergency call when there is an emergency. However, Section 5.1.6 of TS 24.229, version 5, also allows for the possibility that the mobile device establishes an emergency call when there is not an emergency. For instance, an entity can send a 380 (Alternative Service) response with the <type> child element set to "emergency" to the mobile device thereby prompting the mobile device to automatically attempt an emergency call setup. The entity might be a rogue mobile device, a mobile device with a faulty protocol implementation, or a rogue server. In this situation, the mobile device would automatically attempt an emergency call setup even though there might be no apparent emergency. SIP messages with a number 3xx - where "xx" stands for 2 digits - mean redirection and they might be sent by a rogue or faulty mobile device or server.

WO98/27714 discloses a system and method for enabling emergency call initiations in response to the detection of a vehicle accident using messages transmitted from deployment sensors upon detection of the accident.

The invention is defined by the appended claims.

### Brief Description of the Drawings

Embodiments will now be described with reference to the attached drawings in which:
Figure 1A is a block diagram of an example communication system;
Figure 1B is a block diagram of a mobile device;
Figure 2 is a flowchart of an example method of conditionally attempting an emergency call setup;
Figures 3 through 6 are flowcharts of other example methods of conditionally attempting an emergency call setup;
Figure 7 is a block diagram of another communications system;
Figure 8 is a flowchart of a method of blocking at least some messages from being delivered to their target mobile device; and
Figures 9 and 10 are flowcharts of other example methods of blocking at least some of the messages from being delivered to their target mobile device.

### Description of Preferred Embodiments

### Conditional Emergency Call Setup: Communication System

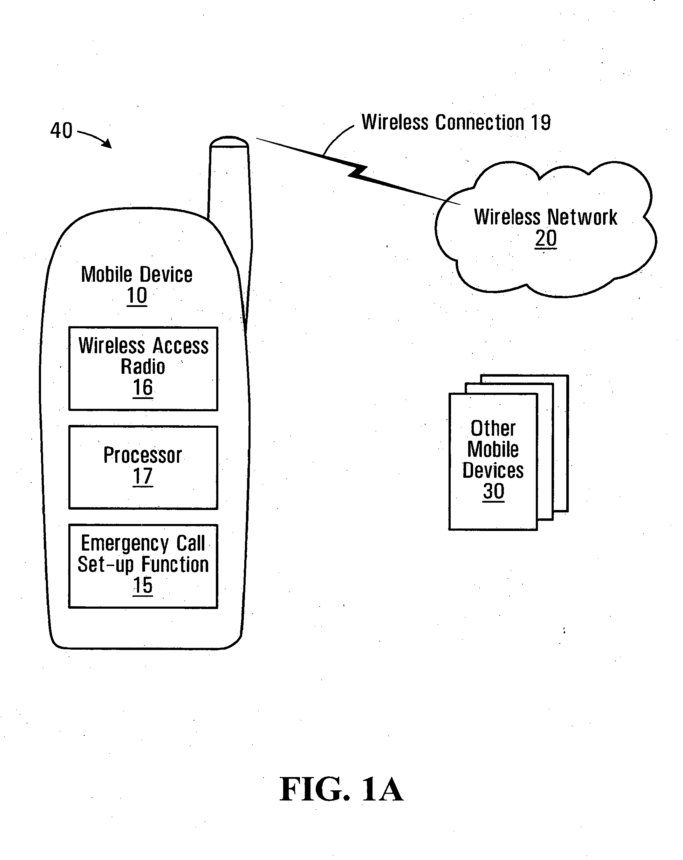

Referring now to Figure 1A, shown is a block diagram of an example communication system 40. The communication system 40 has a wireless network 20, a mobile device 10, and other mobile devices 30; the communication system 40 may have other components, but they are not shown for sake of simplicity. The mobile device 10 has a wireless access radio 16, a processor 17, and an emergency call setup function 15; the mobile device 10 may have other components, but they are not shown for sake of simplicity. The other mobile devices 30 may each have components similar to those of the mobile device 10. Alternatively, some or all of the other mobile devices 30 may have different components than those of the mobile device 10.

In operation, the mobile device 10 communicates with the wireless network 20 using its wireless access radio 16. The wireless communication is over a wireless connection 19 between the mobile device 10 and the wireless network 20. The other mobile devices 30 may similarly communicate with the wireless network 20 over respective wireless connections (not shown). The communication with the wireless network 20 might for example be telephony, or other forms of communication such as email.

Some communication might include emergency calls. For instance, the mobile device 10 might attempt an emergency call upon receiving a message prompting an emergency call setup. The source of the message prompting the emergency call setup might for example be one of the other mobile devices 30, or the wireless network 20 itself. In the event that the source of the message is one of the other mobile devices 30, then the source might be a rogue mobile device attempting to trigger the mobile device 10 to attempt an emergency call setup even though there may be no apparent emergency. There may be other situations in which the mobile device 10 receives a message prompting an emergency call setup when there is no apparent emergency.

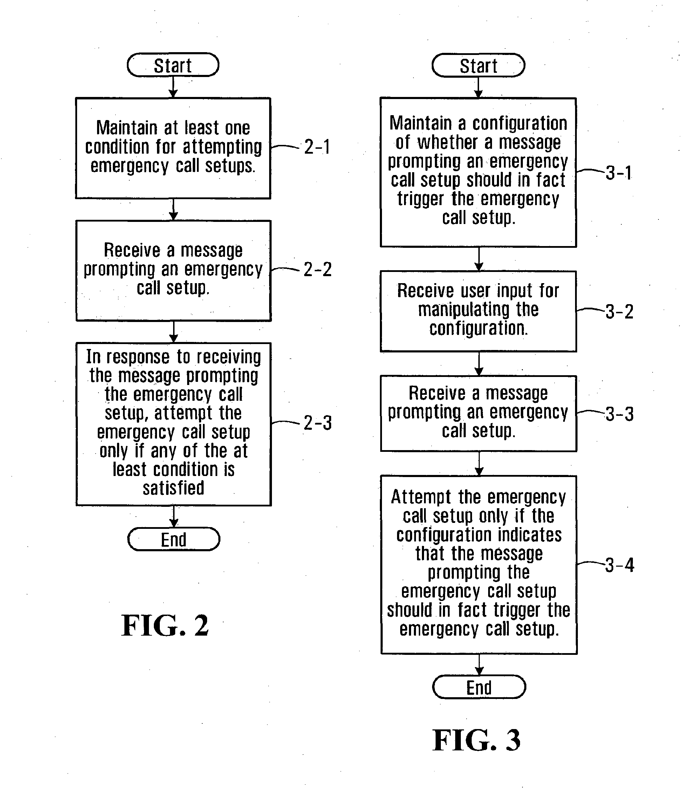

According to an embodiment of the application, the emergency call setup function 15 maintains at least one condition for attempting emergency call setups. Upon receiving a message prompting an emergency call setup, the emergency call setup is attempted only if any of the at least one condition is satisfied. This allows the mobile device 10 to disregard a message prompting an emergency call setup in the event that there is no need to setup an emergency call. Further details are provided with reference to Figures 2 through 5.

In the illustrated example, the emergency call setup function 15 is implemented as software and is executed on the processor 17. However, more generally, the emergency call setup function 15 may be implemented as software, hardware, firmware, or any appropriate combination thereof.

In the illustrated example, the communication devices 10,30 are assumed to be mobile devices. However, more generally, embodiments of the application applicable to communication devices, which may be mobile or wired. For wired devices, there is no need for a wireless access radio. Rather, wired devices may be provided with any appropriate communications interface. For the case of wired devices, the network 20 need not be wireless.

The wireless network 20 is not shown with any specific components. However, it is to be understood that the wireless network 20 would have any appropriate components suitable for a wired and/or wireless network. The components are implementation specific and may depend on the type of network. The network 20 may be of any appropriate type, for example GPRS, UMTS, CDMA etc. IMS services are beareragnostic. In some implementations, the wireless network 20 includes P-CSCF (Proxy Call Session Control Function) nodes for processing transmission of SIP messages. Other implementations are possible.

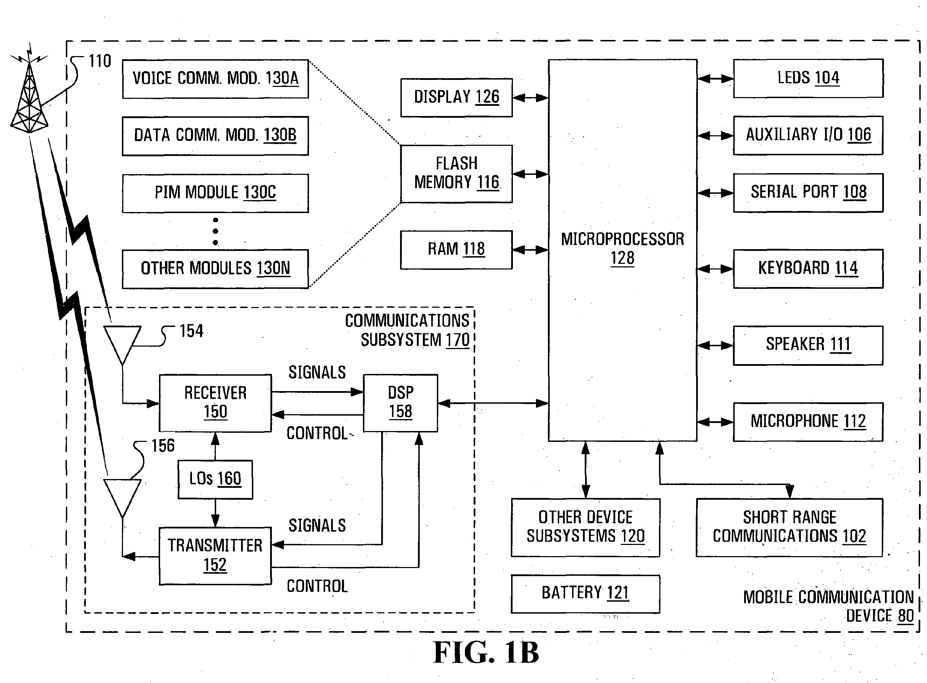

Referring now to Figure 1B, shown is a block diagram of another mobile device 80 that may implement any of the methods described herein. The mobile device 80 is shown with specific components for implementing features similar to those of the mobile device 10 of Figure 1A. It is to be understood that the mobile device 80 is shown with very specific details for example purposes only.

A processing device (a microprocessor 128) is shown schematically as coupled between a keyboard 114 and a display 126. The microprocessor 128 is a type of processor with features similar to those of the processor 17 of the mobile device 10 shown in Figure 1A. The microprocessor 128 controls operation of the display 126, as well as overall operation of the mobile device 80, in response to actuation of keys on the keyboard 114 by a user.

The mobile device 80 has a housing that may be elongated vertically, or may take on other sizes and shapes (including clamshell housing structures). The keyboard 114 may include a mode selection key, or other hardware or software for switching between text entry and telephony entry.

In addition to the microprocessor 128, other parts of the mobile device 80 are shown schematically. These include: a communications subsystem 170; a short-range communications subsystem 102; the keyboard 114 and the display 126, along with other input/output devices including a set of LEDS 104, a set of auxiliary I/O devices 106, a serial port 108, a speaker 111 and a microphone 112; as well as memory devices including a flash memory 116 and a Random Access Memory (RAM) 118; and various other device subsystems 120. The mobile device 80 may have a battery 121 to power the active elements of the mobile device 80. The mobile device 80 is in some embodiments a two-way radio frequency (RF) communication device having voice and data communication capabilities. In addition, the mobile device 80 in some embodiments has the capability to communicate with other computer systems via the Internet.

Operating system software executed by the microprocessor 128 is in some embodiments stored in a persistent store, such as the flash memory 116, but may be stored in other types of memory devices, such as a read only memory (ROM) or similar storage element. In addition, system software, specific device applications, or parts thereof, may be temporarily loaded into a volatile store, such as the RAM 118. Communication signals received by the mobile device 80 may also be stored to the RAM 118.

The microprocessor 128, in addition to its operating system functions, enables execution of software applications on the mobile device 80. A predetermined set of software applications that control basic device operations, such as a voice communications module 130A and a data communications module 130B, may be installed on the mobile device 80 during manufacture. In addition, a personal information manager (PIM) application module 130C may also be installed on the mobile device 80 during manufacture. The PIM application is in some embodiments capable of organizing and managing data items, such as e-mail, calendar events, voice mails, appointments, and task items. The PIM application is also in some embodiments capable of sending and receiving data items via a wireless network 110. In some embodiments, the data items managed by the PIM application are seamlessly integrated, synchronized and updated via the wireless network 110 with the device user's corresponding data items stored or associated with a host computer system. As well, additional software modules, illustrated as another software module 130N, may be installed during manufacture. One or more of the modules 130A, 130B, 130C, 130N of the flash memory 116 can be configured for implementing features similar to those of the emergency call setup function 15 of the mobile device 10 shown in Figure 1A. For example, one of the other modules 130N can be configured so that when it is executed on the microprocessor 128, the mobile device 80 maintains at least one condition for attempting emergency call setups. In response to receiving a message prompting an emergency call setup, the mobile device 80 attempts the emergency call setup only if any of the at least one condition is satisfied. There may be provided video calling capability in addition to voice calling capability.

Communication functions, including data and voice communications, are performed through the communication subsystem 170, and possibly through the short-range communications subsystem 170. The communication subsystem 170 includes a receiver 150, a transmitter 152 and one or more antennas, illustrated as a receive antenna 154 and a transmit antenna 156. In addition, the communication subsystem 170 also includes a processing module, such as a digital signal processor (DSP) 158, and local oscillators (LOs) 160. The communication subsystem 170 having the transmitter 152 and the receiver 150 is an implementation of a wireless access radio with features similar to those of the wireless access radio 16 of the mobile device 10 shown in Figure 1A. The specific design and implementation of the communication subsystem 170 is dependent upon the communication network in which the mobile device 80 is intended to operate. For example, the communication subsystem 170 of the mobile device 80 may be designed to operate with the Mobitex^{™}, DataTAC^{™} or General Packet Radio Service (GPRS) mobile data communication networks and also designed to operate with any of a variety of voice communication networks, such as Advanced Mobile Phone Service (AMPS), Time Division Multiple Access (TDMA), Code Division Multiple Access CDMA, Personal Communications Service (PCS), Global System for Mobile Communications (GSM), etc. Other types of data and voice networks, both separate and integrated, may also be utilized with the mobile device 80.

Network access may vary depending upon the type of communication system. For example, in the Mobitex^{™} and DataTAC^{™} networks, mobile devices are registered on the network using a unique Personal Identification Number (PIN) associated with each device. In GPRS networks, however, network access is typically associated with a subscriber or user of a device. A GPRS device therefore typically has a subscriber identity module, commonly referred to as a Subscriber Identity Module (SIM) card, in order to operate on a GPRS network.

When network registration or activation procedures have been completed, the mobile device 80 may send and receive communication signals over the communication network 110. Signals received from the communication network 110 by the receive antenna 154 are routed to the receiver 150, which provides for signal amplification, frequency down conversion, filtering, channel selection, etc., and may also provide analog to digital conversion. Analog-to-digital conversion of the received signal allows the DSP 158 to perform more complex communication functions, such as demodulation and decoding. In a similar manner, signals to be transmitted to the network 110 are processed (e.g., modulated and encoded) by the DSP 158 and are then provided to the transmitter 152 for digital to analog conversion, frequency up conversion, filtering, amplification and transmission to the communication network 110 (or networks) via the transmit antenna 156.

In addition to processing communication signals, the DSP 158 provides for control of the receiver 150 and the transmitter 152. For example, gains applied to communication signals in the receiver 150 and the transmitter 152 may be adaptively controlled through automatic gain control algorithms implemented in the DSP 158.

In a data communication mode, a received signal, such as a text message or web page download, is processed by the communication subsystem 170 and is input to the microprocessor 128. The received signal is then further processed by the microprocessor 128 for an output to the display 126, or alternatively to some other auxiliary I/O devices 106. A device user may also compose data items, such as e-mail messages, using the keyboard 114 and/or some other auxiliary I/O device 106, such as a touchpad, a rocker switch, a thumb-wheel, or some other type of input device. The composed data items may then be transmitted over the communication network 110 via the communication subsystem 170.

In a voice communication mode, overall operation of the device is substantially similar to the data communication mode, except that received signals are output to a speaker 111, and signals for transmission are generated by a microphone 112. Alternative voice or audio I/O subsystems, such as a voice message recording subsystem, may also be implemented on the mobile device 80. In addition, the display 126 may also be utilized in voice communication mode, for example, to display the identity of a calling party, the duration of a voice call, or other voice call related information.

The short-range communications subsystem 102 enables communication between the mobile device 80 and other proximate systems or devices, which need not necessarily be similar devices. For example, the short-range communications subsystem may include an infrared device and associated circuits and components, or a Bluetooth^{™} communication module to provide for communication with similarly-enabled systems and devices.

### Conditional Emergency Call Setup: Device Methods

Referring now to Figure 2, shown is a flowchart of an example method of conditionally attempting an emergency call setup. This method may be implemented in a communications device, for example by the emergency call setup function 15 of the mobile device 10 shown in Figure 1A. Alternatively, the method may be implemented in the mobile device 80 shown in Figure 1B. More generally, the method may be implemented in any appropriate communications device.

At step 2-1, the communications device maintains at least one condition for attempting emergency call setups. At step 2-2, the communications device receives a message prompting an emergency call setup. At step 2-3, in response to receiving the message prompting the emergency call setup, the communications device attempts the emergency call setup only if any of the at least one condition is satisfied. Otherwise, the communications device does not attempt the emergency call setup.

There are many possibilities for the message prompting the emergency call setup. In some implementations, the message is a 380 alternative service message that prompts the emergency call setup. The 380 alternative service message might prompt the emergency call setup for example by having an XML (Extensible Markup Language) body that includes an <alternative service> element with the <type> child element set to "emergency". Alternatively, the 380 alternative service message might prompt the emergency call setup using any other type of encoding. More generally, the message may be any message that prompts an emergency call setup.

There are many possibilities for the at least one condition. The at least one condition includes one or more conditions, at least one of which is to be satisfied for attempting an emergency call setup. Since there are many possibilities for the at least one condition, it follows that there are many possibilities for attempting the emergency call setup only if any of the at least one condition is satisfied. There may be many configurations for the at least one condition. Satisfying a given condition can be any Boolean function of these configurations. To illustrate this point, further examples are provided below with reference to Figures 3 through 6. It is to be understood that these further examples are a mere sample of the possibilities.

Referring now to Figures 3 through 6, shown are flowcharts of other example methods of conditionally attempting an emergency call setup. These methods may be implemented in a communications device, for example by the emergency call setup function 15 of the mobile device 10 shown in Figure 1A. Alternatively, these methods may be implemented in the mobile device 80 shown in Figure 1B. More generally, these methods may be implemented in any appropriate communications device. These methods may be implemented separately, or in any appropriate combination.

Referring first to Figure 3, at step 3-1, the communications device maintains a configuration of whether a message prompting an emergency call setup should in fact trigger the emergency call setup. In some implementations, as shown in step 3-2, the communications device receives user input for manipulating the configuration. This may for example be accomplished through a user interface of the communications device. At step 3-3, the communications device receives a message prompting an emergency call setup. At step 3-4, the communications device attempts the emergency call setup only if the configuration indicates that the message prompting the emergency call setup should in fact trigger the emergency call setup. Otherwise, the communications device does not attempt the emergency call setup. Therefore, the condition is that the configuration indicates that the message prompting the emergency call setup should in fact trigger the emergency call setup.

In the illustrated example, the communications device receives user input for manipulating the configuration. This provides the user with the ability to specify whether messages prompting an emergency call setup should in fact trigger the emergency call setup. In some implementations, the user can manipulate the configuration at any appropriate time. Note that there does not need to be any user input even though the user may be provided with the opportunity to provide user input. In other implementations, the configuration is non-configurable by the user. The configuration may be non-configurable for example by being hard-coded. Other implementations are possible.

In another implementation, the communications device receives network input for manipulating the configuration. This allows the configuration to be manipulated by the communications network. In another implementation, the communications device receives both user input and network input for manipulating the configuration. Other implementations are possible.

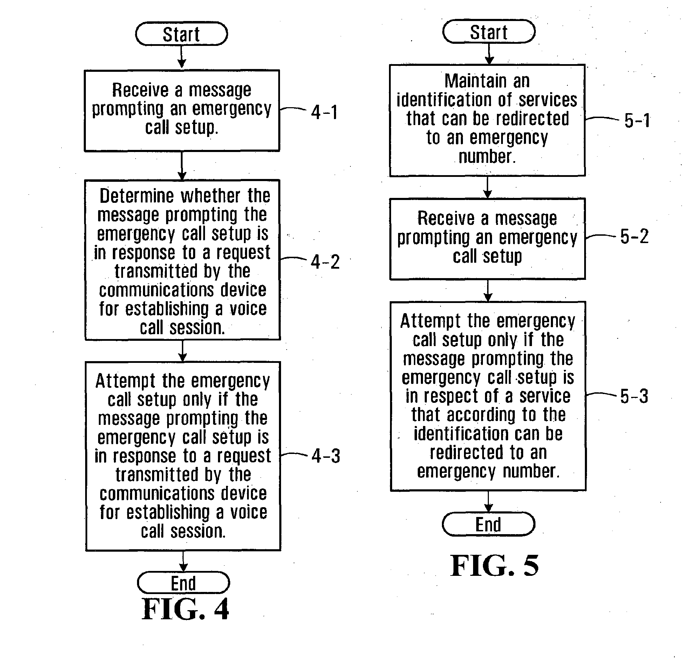

Referring now to Figure 4, at step 4-1 the communications device receives a message prompting an emergency call setup. At step 4-2, the communications device determines whether the message prompting the emergency call setup is in response to a request transmitted by the communications device for establishing a voice call session. At step 4-3, the communications device attempts the emergency call setup only if the message prompting the emergency call setup is in response to a request transmitted by the communications device for establishing a voice call session. Otherwise, the communications device does not attempt the emergency call setup. Therefore, the condition is that the message prompting the emergency call setup is in response to a request transmitted by the communications device for establishing a voice call session. For instance, if the message prompting the emergency call setup is in response to a request transmitted by the communications device for establishing an IM (Instant Messaging) session, then the communications device does not attempt the emergency call setup.

In the illustrated example, behaviour is defined for a specific type of session, namely a voice call session. However, it is to be understood that behaviour may be defined for other types of communication sessions, for example a video call session. In another implementation, the communications device determines whether the message prompting the emergency call setup is in response to a request transmitted by the communications device for establishing a video call session. According to this implementation, the communications device attempts the emergency call setup only if the message prompting the emergency call setup is in response to a request transmitted by the communications device for establishing a video call session.

In the example presented above with reference to Figure 4, the communications device might assume that IM session services should not be redirected to an emergency number. In some implementations, the communications device maintains an identification of services that can be redirected to an emergency number. An example of this is provided below with reference to Figure 5.

Referring now to Figure 5, at step 5-1, the communications device maintains an identification of services that can be redirected to an emergency number. At step 5-2, the communications device receives a message prompting an emergency call setup. At step 5-3, the communications device attempts the emergency call setup only if the message prompting the emergency call setup is in respect of a service that according to the identification can be redirected to an emergency number. Otherwise, the communications device does not attempt the emergency call setup. Therefore, the condition is that the message prompting the emergency call setup is in respect of a service that according to the identification can be redirected to an emergency number.

In some implementations, the identification of services that can be redirected to an emergency number may be configurable by the user. In other implementations, the identification of services that can be redirected to an emergency number is non-configurable. The configuration may be non-configurable for example by being hard-coded. Other implementations are possible.

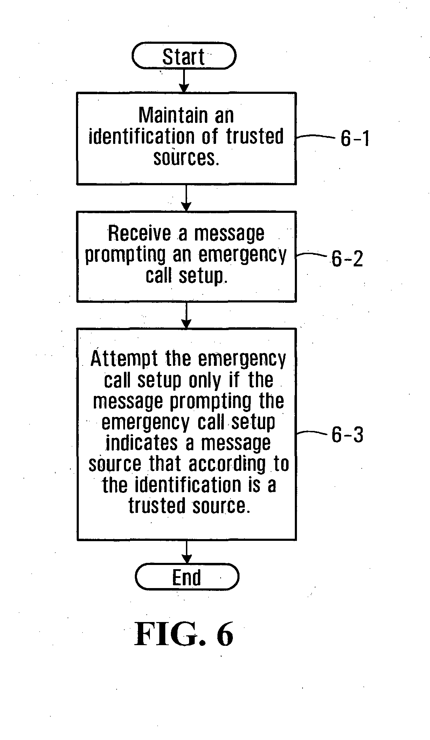

Referring now to Figure 6, at step 6-1, the communications device maintains an identification of trusted sources. At step 6-2, the communications device receives a message prompting an emergency call setup. At step 6-3, the communications device attempts the emergency call setup only there is indication that the message prompting the emergency call setup was sent from a message source that according to the identification is a trusted source. In some implementations, the message prompting the emergency call setup indicates a message source. In other implementations, the communications device is aware of the message source by other means. Otherwise, the communications device does not attempt the emergency call setup, as the message prompting the emergency call setup may have originated from a rogue communications device or some other rogue entity. Therefore, the condition is that the message prompting the emergency call setup indicates a message source that according to the identification is a trusted source.

According to the example present above with reference to Figure 6, the message prompting the emergency call setup may be provided with an identification of the message source, which allows a determination of whether to trust the message source. More generally, embodiments of the application are applicable to any SIP message, as there may be other SIP messages received from unknown sources. Such SIP messages might cause other undesirable situations aside from prompting an emergency call setup. Appropriate authentication can be performed to verify the message source. Further examples are provided in the additional sections below.

In the examples presented herein, there are situations in which receiving a message prompting an emergency call setup does not trigger the communications device to attempt an emergency call setup. In some implementations, the communications device warns a user of the communications device if the emergency call setup is not attempted in response to the message prompting the emergency call setup. The warning may be issued by the communications device, for example via a user interface of the communications device.

### Conditional Emergency Call Setup: Another Communication System

In the examples presented above, the communications device conditionally attempts an emergency call setup in response to receiving a message prompting the communications device to attempt an emergency call setup. In another embodiment, the communications network blocks at least some of the messages. In another embodiment, the communications network blocks at least some messages while communications devices conditionally attempt emergency call setups in response to receiving messages prompting emergency call setups.

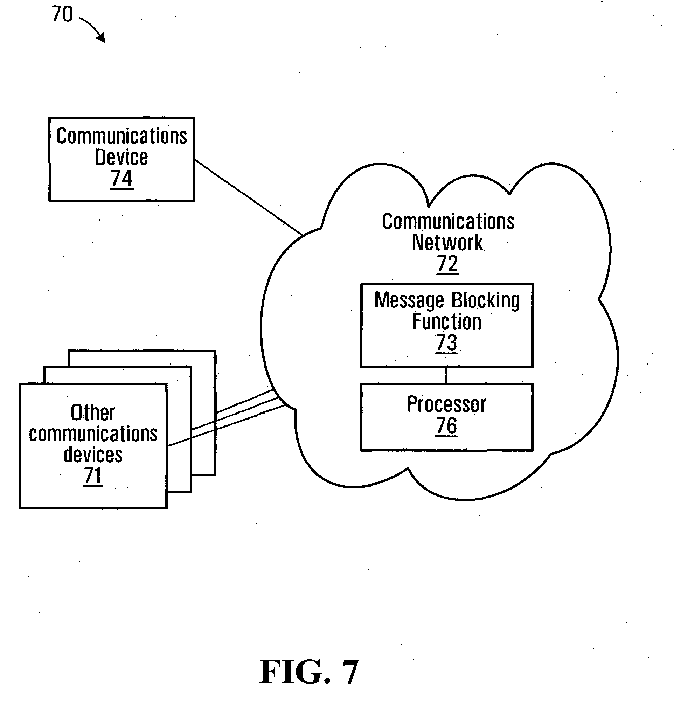

Referring now to Figure 7, shown is a block diagram of another communications system 70. The communications system 70 has a communications network 72, which has a message blocking function 73 coupled to a processor 76. The communications network 72 may have other components, but they are not shown for sake of simplicity. The communications system 70 has a communications device 74, and may have other communication devices 71. The communication devices 71,74 may each be mobile devices or wired devices. Details of the communication devices 71,74 are omitted for sake of simplicity. The communication system 70 may have other components, but they are not shown for sake of simplicity.

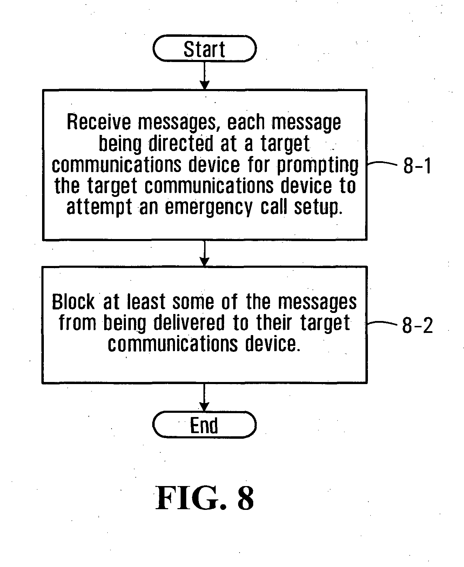

In operation, the communication devices 71,74 communicate over the communication network 72. The communication might for example include messages of a defined type that prompt a target communications device to attempt an emergency call setup. For example, one of the other communication devices 71 might send a message of the defined type to the communications device 74. For each messages of the predefined type that is sent, the communications network 72 receives the message. According to an embodiment of the application, the message blocking function 73 blocks at least some of the messages of the predefined type from being forwarded along a signaling data path. Further details are provided below with reference to Figure 8 through 10.

In the illustrated example, the message blocking function 73 is implemented as software and is executed on the processor 76. However, more generally, the message blocking function 73 may be implemented as software, hardware, firmware, or any appropriate combination thereof. Although shown as a single component, more generally, the message blocking function 73 may have one or more components. The one or more components may be distributed throughout the communications network 72 or located on a single network element. The one or more components may be integrated with other components of the communications network 72. In some implementations, the message blocking function 73 includes both a message blocking function for delivering messages to target devices, and a message blocking function for forwarding messages to another component of the communications network 72. Other implementations are possible.

In some implementations, the communications network 72 is a wireless network. However, for the case of wired devices, the communications network 72 need not be wireless. Therefore, in other implementations, the communications network 72 is a wired network. In other implementations, the communications network 72 includes a wired network and a wireless network. Other implementations are possible.

The communications network 72 is shown without specific components. However, it is to be understood that the communications network 72 would have any appropriate components suitable for a wired and/or wireless network. The components are implementation specific and may depend on the type of network. The communications network 72 may be of any appropriate type, for example GPRS, UMTS, CDMA etc. IMS services are beareragnostic. In some implementations, the communications network 72 includes P-CSCF (Proxy Call Session Control Function) nodes for processing transmission of SIP messages. Other implementations are possible.

### Conditional Emergency Call Setup: Network Methods

Referring now to Figure 8, shown is a flowchart of a method of blocking at least some messages from being delivered to their target communications device. This method may be implemented in a communication network, for example by the message blocking function 73 of the communications network 72 shown in Figure 7.

At step 8-1, the communication network receives messages, each message being directed at a target communications device for prompting the target communications device to attempt an emergency call setup. At step 8-2, the communication network blocks at least some of the messages from being delivered to their target communications device.

There are many possibilities for each message that is directed at a target communications device for prompting the target communications device to attempt an emergency call setup. Each message may be any appropriate message that prompts an emergency call setup, examples or which have been provided above.

There are many ways for the communication network to block at least some of the messages from being delivered to their target communications device. To illustrate this point, other example methods of blocking at least some of the messages from being delivered to their target communications device are provided below.

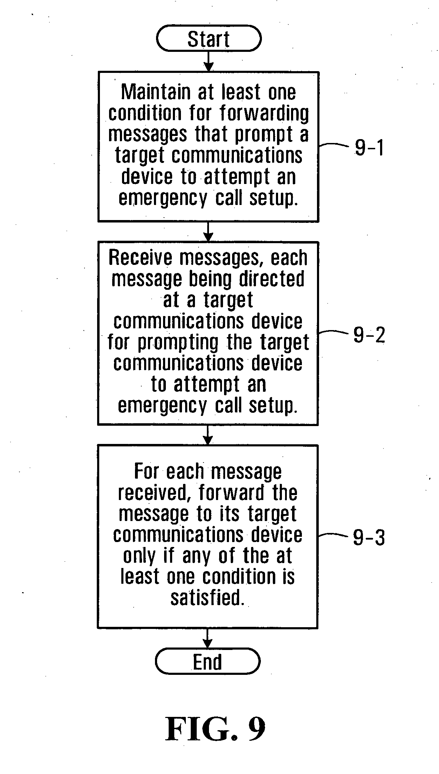

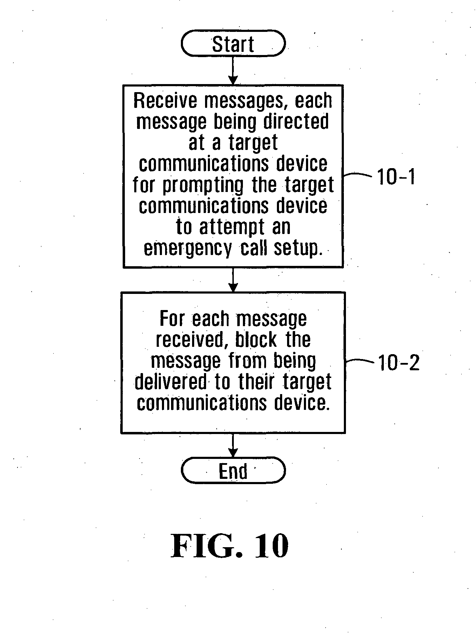

Referring now to Figures 9 and 10, shown are flowcharts of other example methods of blocking at least some of the messages from being delivered to their target communications device. These methods may be implemented in a communications network, for example by the message blocking function 73 of the communications network 72 shown in Figure 7.

Referring first to Figure 9, at step 9-1 the communications network maintains at least one condition for forwarding messages that prompt a target communications device to attempt an emergency call setup. At step 9-2, the communications network receives messages, each message being directed at a target communications device for prompting the target communications device to attempt an emergency call setup. At step 9-3, for each message received, the communications network forwards the message to its target communications device only if any of the at least one condition is satisfied.

There are many possibilities for maintaining at least one condition for forwarding the messages. In some implementations, the communications network maintains an identification of trusted sources. Accordingly, in some implementations, for each message received, the communications network forwards the message only there is indication that the message was sent from a message source that according to the identification is a trusted source. In some implementations, the message prompting the emergency call setup indicates a message source. In other implementations, the communications network is aware of the message source by other means. Other implementations are possible.

In the illustrated example, the communications network forwards the message to its target communications device. In another implementation, the communications network forwards the message to a network component within the communications network. More generally, the communications network forwards the message along a signaling data path, which might involve forwarding the message to its target communications device or forwarding the message to a network component within the communications network. If forwarded to a network component, the message might be forwarded to its target communications device or forwarded to yet another network component within the communications network.

Referring now to Figure 10, at step 10-1 the communications network receives messages, each message being directed at a target communications device for prompting the target communications device to attempt an emergency call setup. At step 10-2, for each message received, the communications network blocks all of the messages from being delivered to their target communications device.

In the illustrated example, the communications network blocks all of the messages from being delivered to their target communications device. This might be executed by a network component that is in a position to deliver messages to the target communications device, or by a network component that forwards messages to another network component in order for the communications device to receive the messages.

Numerous modifications and variations of the present application are possible in light of the above teachings. It is therefore to be understood that within the scope of the appended claims, the application may be practised otherwise than as specifically described herein.

## Claims

1. A method in a communications device (10) comprising:
maintaining (6-1) an identification of a trusted source;
receiving (6-2) a message prompting an emergency call setup;
determining (6-1, 6-3) whether a message source indicated by the message is a the same as the identification of the trusted source; and
attempting (6-3) the emergency call setup only if the message source indicated by the message is determined to be the same as the identification of the trusted source.

2. The method of claim 1, wherein the message is a 380 alternative service message.

3. The method of claim 1 or 2, wherein the message is a response message sent in response to a request message from the communications device.

4. The method of claim 3, wherein the request message is a Session Initiation Protocol 'SIP' INVITE request.

5. The method of any one of claims 3 to 4, wherein the message source is a Proxy Call Session Control Function 'P-CSCF' and the response message is received from the P-CSCF.

6. A storage medium (15) comprising computer readable instructions for performing the method of any one of claims 1 to 5.

7. A communications device (10) configured to implement the method of any one of claims 1 to 5.

8. The communications device (10) of claim 7, wherein the communications device is a mobile device (10) comprising a wireless access radio (16).

9. A network method for emergency call setup, comprising:
sending an identity of a trusted source to a communications device; and
sending (6-2), to the communications device, a message prompting an emergency call setup by said device,
wherein said message indicates a source of the message, said indication being usable by the communications device to determine (6-1,6-3) whether the source of the message is the trusted source.

10. A storage medium comprising computer readable instructions for performing the method of claim 9.

11. A communications network (20) configured to implement the method of claim 9.

12. The communications network (20) of claim 11, wherein the communications network (20) is a wireless network (20) comprising a Proxy Call Session Control Function 'P-CSCF' node for processing transmission of SIP messages.

## Patentansprüche

1. Ein Verfahren in einer Kommunikationsvorrichtung (10), umfassend:
Unterstützen (6-1) einer Identifizierung einer vertrauenswürdigen Quelle;
Erhalten (6-2) einer Nachricht, die einen Notrufaufbau aufruft;
Bestimmen (6-1, 6-3), ob eine Nachrichtenquelle, die von der der Nachricht angezeigt wird, dieselbe ist wie die Identifizierung der vertrauenswürdigen Quelle, und
Versuchen (6-3) des Notrufaufbaus nur dann, wenn die Nachrichtenquelle, die durch die Nachricht angegeben wird, bestimmt wird als dieselbe wie die Identifizierung der vertrauenswürdigen Quelle.

2. Das Verfahren nach Anspruch 1, wobei die Nachricht eine 380 alternative Servicenachricht ist.

3. Das Verfahren nach Anspruch 1 oder 2, wobei die Nachricht eine Antwortnachricht ist, die in Antwort auf eine Anforderungsnachricht von der Kommunikationsvorrichtung gesendet wurde.

4. Das Verfahren nach Anspruch 3, wobei die Anforderungsnachricht eine Sitzungs-Initiierungs-Protokoll-SIP-INVITE-Anforderung ist.

5. Das Verfahren nach einem der Ansprüche 3 bis 4, wobei die Nachrichtenquelle eine Proxy-Anruf-Sitzungs-Steuerungsfunktion P-CSCF ist und die Antwortnachricht von der P-CSCF erhalten wird.

6. Ein Speichermedium (15), das computerlesbare Instruktionen zum Durchführen des Verfahrens nach einem der Ansprüche 1 bis 5 umfasst.

7. Eine Kommunikationsvorrichtung (10), die konfiguriert ist, um das Verfahren nach einem der Ansprüche 1 bis 5 zu implementieren.

8. Die Kommunikationsvorrichtung (10) nach Anspruch 7, wobei die Kommunikationsvorrichtung eine mobile Vorrichtung (10) ist, die einen drahtlosen Zugangsfunk (16) umfasst.

9. Ein Netzwerkverfahren für einen Notrufaufbau, umfassend:
Senden einer Identität einer vertrauenswürdigen Quelle an eine Kommunikationsvorrichtung; und
Senden (6-2), an die Kommunikationsvorrichtung, einer Nachricht, die einen Notrufaufbau durch die Vorrichtung aufruft,
wobei die Nachricht eine Quelle der Nachricht angibt, wobei die Angabe durch die Kommunikationsvorrichtung benutzbar ist, um zu bestimmen (6-1, 6-3), ob die Quelle der Nachricht die vertrauenswürdige Quelle ist.

10. Ein Speichermedium, das computerlesbare Instruktionen zum Durchführen des Verfahrens nach Anspruch 9 umfasst.

11. Ein Kommunikationsnetzwerk (20), das konfiguriert ist, um das Verfahren nach Anspruch 9 zu implementieren.

12. Das Kommunikationsnetzwerk (20) nach Anspruch 11, wobei das Kommunikationsnetzwerk (20) ein drahtloses Netzwerk (20) ist, das einen Proxy-Anruf-Sitzungs-Steuerungsfunktion-P-CSCF-Knoten zum Verarbeiten von Übertragung von SIP-Nachrichten umfasst.

## Revendications

1. Procédé sur un dispositif de communication (10), comprenant les étapes consistant à :
maintenir (6-1) une identification d'une source de confiance ;
recevoir (6-2) un message demandant l'établissement d'un appel d'urgence ;
déterminer (6-1, 6-3) si une source de message indiquée dans le message est la même que l'identification de la source de confiance ; et
tenter (6-3) l'établissement de l'appel d'urgence uniquement s'il a été déterminé que la source de message indiquée dans le message est la même que l'identification de la source de confiance.

2. Procédé selon la revendication 1, dans lequel le message est un message alternatif de service 380.

3. Procédé selon la revendication 1 ou 2, dans lequel le message est un message de réponse envoyé en réponse à un message de demande en provenance du dispositif de communication.

4. Procédé selon la revendication 3, dans lequel le message de demande est une demande INVITE du protocole de lancement de session, SIP pour *« Session Initiation Protocol* ».

5. Procédé selon l'une quelconque des revendications 3 et 4, dans lequel la source du message est une fonction mandataire de commande de session d'appel, P-CSCF pour « *Proxy Call Session Control Function »* et le message de réponse est reçu de la fonction P-CSCF.

6. Support de stockage (15) comprenant des instructions lisibles par ordinateur destinées à exécuter le procédé selon l'une quelconque des revendications 1 à 5.

7. Dispositif de communication (10) configuré pour mettre en oeuvre le procédé selon l'une quelconque des revendications 1 à 5.

8. Dispositif de communication (10) selon la revendication 7, dans lequel le dispositif de communication est un dispositif mobile (10) comprenant une fonction radio d'accès sans fil (16).

9. Procédé de réseau pour l'établissement d'un appel d'urgence, comprenant les étapes consistant à :
envoyer une identité d'une source de confiance à un dispositif de communication ; et
envoyer (6-2) au dispositif de communication un message demandant l'établissement d'un appel d'urgence par ledit dispositif ;
dans lequel ledit message indique une source du message, ladite indication pouvant être utilisée par le dispositif de communication pour déterminer (6-1, 6-3) si la source du message est la source de confiance.

10. Support de stockage comprenant des instructions lisibles par ordinateur afin d'exécuter le procédé selon la revendication 9.

11. Réseau de communication (20) configuré pour mettre en oeuvre le procédé selon la revendication 9.

12. Réseau de communication (20) selon la revendication 11, dans lequel le réseau de communication (20) est un réseau sans fil (20) comprenant un noeud offrant une fonction mandataire de commande de session d'appel, P-CSCF pour *« Proxy Call Session Control Function »* afin de traiter l'émission de messages SIP.
